# DEMANDE DE BREVET EUROPEEN

(11) **EP 2 192 158 A1**
(43) Date de publication de la demande: **02.06.2010**
(21) Numéro de dépôt: 09306145.5
(22) Date de dépôt: 26.11.2009
(51) Int. Cl.: C08L 95/00

(54) **Liant hydrocarboné pour la production de mélanges tièdes**

(30) Priorité: 28.11.2008 FR 0858128
(71) Demandeur: COLAS, 92100 Boulogne-Billancourt (FR)
(72) Inventeur: Delcroix, Thierry, 95600 Eaubonne (FR); Durand, Graziella, 78460 Chevreuse (FR)
(74) Mandataire: Michelet, Alain

(57) **Abrégé**

La présente invention concerne un liant hydrocarboné à base de bitume ou de liant de synthèse utilisé pour fabriquer des mélanges bitumineux présentant une température de fabrication abaissée. Le liant hydrocarboné comprend au moins un bitume ou un liant de synthèse et un système d'additifs comprenant au moins 10 % en poids de glycérol par rapport au poids total du système d'additifs. L'invention concerne également les mélanges bitumineux ainsi fabriqués et leur procédé de préparation.

## Description

La présente invention concerne un liant hydrocarboné à base de bitume utilisé pour fabriquer des mélanges bitumineux appliqués à chaud présentant une température de fabrication abaissée. L'invention concerne également les mélanges bitumineux ainsi fabriqués et leur procédé de préparation. Les mélanges de l'invention correspondent donc à des mélanges tièdes, au sens où la profession routière emploie cet adjectif (voir par exemple la revue technique Travaux n°848 de janvier 2008 - Des enrobés environnementaux économes en énergie) ou mélanges à température réduite.

Selon l'invention, on entend par « mélanges bitumineux » des granulats mélangés à du bitume ou à des liants de synthèse confectionnés à partir de matières premières d'origine pétrolière ou issue de la biomasse, utilisés pour réaliser des couches et/ou revêtements de construction routière et/ou de génie civil.

Les asphaltes coulés sont intégrés à cette définition, quelle que soit leur fonction (trottoir, voirie, étanchéité, etc).

Le bitume est le principal liant hydrocarboné utilisé dans le domaine de la construction routière ou du génie civil. Il peut être utilisé pur ou modifié par ajout de polymères, il est alors appelé bitume modifié.

Les bitumes utilisés dans les liants routiers sont trop visqueux à température ambiante pour présenter une maniabilité ou encore une mouillabilité correcte vis-à-vis de granulats. Il existe différents moyens de rendre le bitume ou le bitume modifié maniable : soit par chauffage en fonction de sa viscosité, soit en le plaçant en émulsion ou encore en abaissant sa viscosité par mélange avec des solvants ou « fluxants ».

Les procédés de production de mélanges de granulats et de produits bitumineux actuellement utilisés, peuvent être classés en deux classes distinctes : les procédés de production d'enrobés ou d'enrobage à froid et à chaud. On entend par « enrobage à chaud », une opération dans une centrale d'enrobage, comprenant l'évaporation de l'eau du matériau et la mise à la température d'enrobage de ce dernier. On entend par « enrobage à froid », l'enrobage du matériau dans son état hydrique normal, sans chauffage des matériaux ni évaporation de l'eau.

L'invention s'intéresse aux procédés d'enrobage à chaud réalisés à des températures supérieures à 100°C utilisant du bitume sous forme anhydre, dans un état de fluidité suffisant pour assurer un bon enrobage des granulats.

La préparation d'un mélange bitumineux du type précité comprend le mélange du liant et des charges ou granulats à une température dite « de fabrication », puis l'épandage de ce mélange à une température de mise en oeuvre, le compactage du mélange répandu si nécessaire, et enfin le refroidissement du mélange compacté.

La température de fabrication des mélanges varie selon la nature du liant hydrocarboné et plus particulièrement en fonction de la classe du bitume utilisé. Les bitumes peuvent être classés suivant leur classe de pénétrabilité. Chaque classe ou grade correspond à un intervalle de mesures de pénétrabilité. Les bitumes « durs » ont des valeurs de pénétrabilité faibles, les bitumes « mous » ont des valeurs de pénétrabilité relativement élevées.

Pour les enrobés bitumineux, les températures des mélanges entre granulats et liant hydrocarboné comprenant un bitume pur classiquement de pénétrabilité 35/50, sont généralement de 140 à 160°C, voire de 150 à 170°C quand les conditions météorologiques sont plus dures. Dans le cas d'utilisation de liant de pénétrabilité inférieure, les températures de mélange tendent vers les valeurs hautes de ces fourchettes.

Pour les asphaltes bitumineux, les températures de mélange entre granulats et liant hydrocarboné comprenant un bitume pur classiquement de pénétrabilité 35/50, sont généralement de 200 à 240°C.

Ces températures élevées présentent le risque de dégrader les liants, d'entraîner la production de fumées qui contiennent des composés organiques volatils et imposent des coûts énergétiques marqués.

Parmi les solutions proposées pour améliorer la maniabilité du bitume, des agents fluxants à base de matières grasses animales et/ou végétales, renouvelables et non toxiques ont été développées. Leur utilisation permet d'éviter le dégagement de composés organiques volatils (COV).

Les demandes de brevets FR 2721043 et FR 2770850 décrivent ainsi des compositions bitumineuses comprenant des fluxants végétaux tels que des huiles végétales (colza) ou leurs dérivés.

Les demandes de brevet FR 2876382, FR 2891838 et FR 2898604 au nom du présent déposant, décrivent également des fluxants à base matières grasses d'origine naturelle fonctionnalisées chimiquement par oxydation. Les matières grasses d'origine naturelle et leurs dérivés employés en tant que fluxant pour bitume ont subi au moins une réaction de fonctionnalisation chimique ayant introduit au moins un groupe fonctionnel choisi parmi les groupes acide carboxylique, diacide carboxylique, époxyde, peroxyde, aldéhyde, éther, alcool et cétone.

Le brevet FR 2878856 divulgue des enrobés bitumineux et un procédé de préparation de ces enrobés bitumineux à une température de fabrication abaissée. Cet enrobé comprend un liant à base de bitume et deux additifs qui sont une cire d'hydrocarbure et une cire d'ester d'acide gras.

Enfin, la demande de brevet FR 2 901 801 divulgue des produits bitumineux et mélanges de ces produits bitumineux avec des granulats utilisables notamment dans le domaine de la construction et de l'entretien de tapis routiers. Il est précisé que l'additivation du produit bitumineux ou de son mélange avec des granulats à l'aide d'additifs chimiques permet de baisser la température de production des mélanges de granulats et de produit bitumineux de 20 à 40°C, sans dégrader les propriétés du produit bitumineux et du mélange entre produit bitumineux et granulats. Les additifs comprennent nécessairement au moins un additif A ou A1. L'additif A comprend un copolymère oxyde d'éthylène - oxyde de propylène et l'additif A1 répond à la formule chimique suivante :

R-O-((CH₂CH(CH₃)O)ₐ-(CH₂CH₂O)_{b})_{c}P(=O)-OH_{d}.

Les différentes techniques utilisées pour augmenter la maniabilité des liants ou abaisser la température de fabrication des enrobés ne permettent pas de suffisamment baisser la température de fabrication des enrobés à chaud et/ou ne permettent pas de maintenir les propriétés mécaniques des produits obtenus.

La diminution de la température de fabrication des enrobés bitumineux présente de nombreux avantages :
- réduction des risques pour le personnel et amélioration des conditions de travail,
- réduction des énergies de fabrication,
- réduction de l'émission de gaz à effet de serre,
- réduction de la gêne aux riverains.

Il existe donc aujourd'hui un besoin d'une solution permettant d'abaisser la température de fabrication des enrobés à chaud, tout en préservant les propriétés mécaniques des enrobés une fois mis en oeuvre.

De par l'origine végétale de ses matières premières et son mode d'obtention (co-produit de synthèse des esters), le principal avantage de l'invention est son impact environnemental réduit par rapport aux autres solutions présentées ci-dessus
De manière surprenante, l'invention permet de réduire la température de fabrication des enrobés à chaud grâce à l'addition au bitume de base retenu pour la formulation de l'enrobé bitumineux d'un système d'additifs particulier. Cette diminution peut aller jusqu'à 40°C.

La présente invention concerne donc un liant hydrocarboné pour la réalisation de couches et/ou revêtements de construction routière et/ou de génie civil, comprenant au moins un bitume ou un liant de synthèse et un système d'additifs comprenant au moins 10 % en poids de glycérol par rapport au poids total du système d'additifs et éventuellement au moins un autre additif, cet autre additif étant de préférence à base de matières grasses d'origine naturelle.

L'invention concerne également un mélange bitumineux tel qu'un enrobé bitumineux ou un asphalte comprenant des granulats et le liant hydrocarboné tel que décrit ci-dessus. Enfin, l'invention concerne le procédé de préparation dudit mélange bitumineux ou enrobé bitumineux.

On entend par « système d'additifs » selon l'invention, l'ensemble des additifs destinés à être ajoutés au bitume pour former le liant hydrocarboné. Le système d'additifs de l'invention peut être constitué d'un seul additif ou d'un mélange de plusieurs additifs. Lorsque le système d'additifs est constitué d'un seul additif, il comprend donc 100% en poids de glycérol. De préférence, tous les composants du système d'additifs de l'invention sont d'origine végétale.

Selon l'invention, on abaisse considérablement la température de fabrication de l'enrobé sans modifier les caractéristiques du liant hydrocarboné. La pénétrabilité, le point de ramollissement et le module complexe du liant ne sont pas sensiblement modifiés. Par conséquent, le système d'additifs de l'invention à la différence des autres solutions proposées et notamment des cires, ne modifie que très peu les caractéristiques du liant, n'engendrant pas, par exemple, de modification de classe par rapport au bitume utilisé dans le liant.

Le glycérol, sans être soluble dans le bitume, et cela même à température élevée, se disperse dans celui-ci.

Par conséquent, les mécanismes sous-tendant l'invention sont complètement différents des mécanismes mis en oeuvre par exemple par l'utilisation de fluxants seuls. En effet, les fluxants ont de bonnes propriétés « solvant » et facilitent donc la dissolution du bitume au moment de la préparation des liants et la mise en oeuvre de ces liants. Le glycérol n'a pas de pouvoir solvant par rapport au bitume. Sans vouloir être lié par une quelconque théorie, il semble que lorsque le liant est mis en présence des granulats afin de former l'enrobé, le glycérol se sépare du bitume et migre à l'interface entre les granulats et le bitume. Le glycérol joue alors le rôle de lubrifiant, c'est-à-dire que le glycérol s'interpose entre les surfaces des granulats et du bitume et réduit considérablement le frottement entre ces surfaces favorisant ainsi le mouvement relatif de l'une par rapport à l'autre et donc leur écoulement.

Par conséquent, l'effet lubrifiant conféré par le glycérol facilite le mélange du liant hydrocarboné et des granulats permettant ainsi de réduire de façon conséquente leur température de fabrication.

Par rapport aux techniques utilisant des solvants organiques pour améliorer la maniabilité du liant, solvant devant s'évaporer lors de la mise en oeuvre, l'utilisation de glycérol conformément à l'invention présente un intérêt considérable dans la mesure où celui-ci ne s'évapore pas et ne conduit donc pas à de dégagements dans l'atmosphère de composés organiques volatils, dégagements peu recommandés pour l'environnement.

En outre, le glycérol présente pour intérêt de constituer un sous-produit de l'hydrolyse des triglycérides. Le glycérol peut donc être obtenu à partir de ressources naturelles renouvelables. Ce produit est disponible en grande quantité avec le développement de la production des esters végétaux non modifiés (méthyliques, éthyliques, etc...) ou modifiés. L'utilisation de glycérol comme additif pour la production d'enrobé permet donc de résoudre le problème de sa valorisation et de disposer d'un produit extrêmement performant d'un point de vue économique. Selon l'invention, le glycérol est sous forme libre c'est-à-dire que le glycérol ne constitue pas la partie « alcool » de glycérides.

Le système d'additifs de l'invention est formulé de façon à être liquide à température ambiante. Il présente pour autre avantage de ne pas avoir besoin d'être étiqueté en terme de risque pour l'homme.

Dans un mode de réalisation avantageux, le liant hydrocarboné de l'invention possède en outre les caractéristiques suivantes seules ou en combinaison :
- le système d'additifs comprend en outre au moins une matière grasse d'origine naturelle comprenant des chaînes grasses hydrocarbonées éventuellement modifiées et/ou fonctionnalisées,
- la matière grasse d'origine naturelle est choisie parmi les huiles, graisses ou résines animales et/ou végétales, de préférence végétales,
- la matière grasse d'origine naturelle est choisie parmi les acides gras, les esters d'acides gras, préférentiellement les esters d'alkyle, les alcools gras, les esters d'alcools gras, les esters de diacides gras, les esters d'acides résiniques, les acides résiniques, les dérivés de ces composés, et les mélanges de ces composés, d'origine animale ou végétale,
- la matière grasse d'origine naturelle est choisie parmi les esters d'alkyle d'acide gras, de préférence les mono-esters d'alkyle d'acide gras et les dérivés de la résine de pin tels que la poix de tallol (tall oil) et leurs mélanges,
- le système d'additifs comprend en poids par rapport au poids total du système d'additifs :
   - 10 à 100 % de glycérol,
   - 0 à 60 % d'ester d'alkyle d'acide gras,
   - 0 à 60 % de poix de tallol,
- le liant comprend de 0,1 à 5 % de système d'additifs en poids par rapport au poids de bitume, de préférence de 0,5 à 2 % en poids par rapport au poids de bitume.

L'invention concerne encore un mélange bitumineux comprenant :
- des granulats minéraux,
- un liant hydrocarboné tel que défini ci-dessus.

L'invention concerne également un procédé de fabrication d'un mélange bitumineux appliqué à chaud, tel qu'un enrobé bitumineux ou un asphalte, présentant une température de fabrication abaissée comprenant des granulats minéraux enrobés d'un liant hydrocarboné, le procédé comprenant une étape de séchage des granulats suivie d'une étape d'enrobage des granulats par un liant hydrocarboné dans un malaxeur (enrobé bitumineux ou asphalte) ou un pétrin (asphalte).

Selon le procédé de l'invention, le liant hydrocarboné comprend au moins un bitume ou un liant de synthèse et un système d'additifs comprenant au moins 10 % en poids de glycérol par rapport au poids total du système d'additifs et ledit système d'additifs est ajouté au bitume ou au liant de synthèse avant son introduction dans le malaxeur ou le pétrin ou directement dans le malaxeur ou le pétrin. Lorsque le système d'additifs est ajouté au bitume ou au liant de synthèse directement dans le malaxeur ou le pétrin, il est alors introduit au moment de la fabrication du mélange bitumineux.

Le mélange bitume/système d'additifs est maintenu sous agitation, par exemple par brassage et circulation par une pompe dans la cuve de stockage des bitumes.

Lorsque le système d'additifs est ajouté au bitume avant introduction du bitume dans le malaxeur, il est soit ajouté en ligne dans le bitume ou sous forme d'un prémélange avec le bitume.

La température de fabrication d'un enrobé bitumineux comprenant un bitume de grade 35/50 dans le procédé de l'invention est comprise entre 110 et 140°C, de préférence entre 120 et 130°C. La température de fabrication d'un enrobé bitumineux comprenant un bitume de pénétrabilité inférieure à 35 1/10 de mm dans le procédé de l'invention est comprise entre 130 et 150 °C, de préférence entre 135 et 145 °C. Cela représente un abaissement de 30 à 50°C par rapport aux températures usuelles.

Celle d'un asphalte comprenant un bitume de grade 35/50 dans le procédé de l'invention est comprise entre 170 et 210°C, de préférence entre 180 et 190 °C. Cela représente un abaissement de 30 à 50 °C par rapport aux températures usuelles.

L'invention concerne encore l'utilisation de glycérol pour abaisser la température de fabrication et d'application de mélanges bitumineux comprenant des granulats et du bitume.

Le bitume selon la présente invention est un mélange de matières hydrocarbonées d'origine naturelle issues de la fraction lourde obtenue lors de la distillation du pétrole, ou provenant de gisements naturels se présentant sous forme solide ou liquide, de densité comprise entre 0,8 et 1,2. Les bitumes de l'invention peuvent être préparés par toute technique conventionnelle. Sont également admis comme bitumes au sens de l'invention les liants d'origine végétale tel que le Végécol®, commercialisé par la société Colas et décrit dans la demande de brevet FR 2 853 647, les liants de synthèse d'origine pétrolière tels que la gamme des liants Bituclair® commercialisée par la société Colas, les bitumes modifiés par incorporation d'additifs de toute nature tels que des additifs en vue d'améliorer les caractéristiques d'adhésivité, en vue d'apporter artificiellement les propriétés nécessaires à la mise en émulsion cationique, par incorporation d'élastomères, sous forme de poudrette de caoutchouc ou autre, ou bien encore les bitumes améliorés par l'addition de polymères de différents types, tels que des copolymères d'éthylène et d'acétate de vinyle, ou des copolymères statistiques ou à blocs de styrène et de diènes conjugués, par exemple les copolymères à blocs SBS. Cette liste n'étant bien entendu pas limitative. Il est également possible d'utiliser des mélanges de bitumes de différents types.

De préférence, le bitume de la présente invention est un bitume de grade 10/20 à 35/50.

Selon un mode particulier de réalisation de l'invention, le système d'additifs comprend en outre une ou plusieurs matières grasses d'origine naturelle comprenant des chaînes grasses hydrocarbonées.

Par « matières grasses d'origine naturelle », on entend, dans la présente invention, les matières grasses en provenance de la nature, mais aussi leurs dérivés, comme par exemple les mono-esters gras obtenus par trans-estérification de triglycérides par des mono-alcools éventuellement fonctionnalisée.

Les matières grasses d'origine naturelle, éventuellement fonctionnalisées chimiquement peuvent être, sans limitation, directement les huiles et graisses d'origine naturelle, ou bien des acides gras, des esters d'acides gras, préférentiellement des esters d'alkyle, mieux des mono-esters d'alkyle, des alcools gras, des esters d'alcools gras, des triglycérides, des esters de diacides gras, des esters d'acides résiniques, des acides résiniques, des dérivés de ces composés, et des mélanges de ces composés, d'origine animale ou végétale.

De préférence, ces produits correspondent à des fluxants à base de matières grasses d'origine naturelle, et encore mieux, des fluxants à base de matières grasses d'origine naturelle ayant subi une fonctionnalisation chimique par au moins une réaction d'oxydation. Ces produits correspondent aux fluxants décrits dans les brevets FR 2876382, FR 2891838 et FR 2898604. On peut citer, à titre de fluxant convenant à l'invention, les esters d'acide gras de colza oxydé et les dérivés de tallol estérifiés et éthoxylés.

De préférence, les matières grasses d'origine naturelle peuvent également comprendre la poix de tallol (CAS : 8016-81-7), composé qui correspond à un mélange d'acides résiniques, d'acide gras et d'insaponifiables obtenu par distillation du tallol. Ce composé correspond également à un composé d'origine naturelle dans la mesure où il est extrait à partir de la résine de pin ou d'arbres d'espèces diverses dont l'épicéa.

Les mélanges bitumineux de l'invention peuvent être fabriqués dans n'importe quelle centrale d'enrobage.

Il existe deux types principaux de procédés de préparation des enrobés bitumineux, les procédés continus et discontinus. De manière à assurer un bon enrobage et de bonnes performances mécaniques finales, il est classique de sécher les granulats et de les porter à une température proche de celle du bitume.

Dans un procédé continu, les granulats entrent de manière continue dans un malaxeur comprenant une zone de séchage comprenant un moyen permettant le chauffage et le séchage des granulats. Dans une autre zone du malaxeur non exposée au moyen permettant le chauffage et le séchage des granulats, les granulats venant de la zone de séchage sont enrobés par le bitume liquide avant de sortir et d'être acheminés vers une trémie de stockage tampon.

Dans un procédé discontinu, on dispose d'un malaxeur maintenu à température dans lequel sont versés de manière discontinue les différentes fractions granulométriques du granulat. Celles-ci sont homogénéisées par malaxage puis le bitume est rajouté par versement. A la suite du malaxage, le mélange entre granulats et produit bitumineux obtenu peut être stocké en trémie.

L'asphalte de l'invention peut être également être fabriqué en procédé semi-continu (malaxeurs rapides) ou, plus traditionnellement, en procédé discontinu (avec des pétrins fixes ou mobiles)

Le principe de fabrication est globalement équivalent à celui des enrobés bitumineux avec un séchage des matériaux par un tambour sécheur pour le sable et les gravillons, par des silos à cheminées de circulation de gaz chauds pour les fillers et par des circulations d'huiles chaudes en citernes calorifugées pour les bitumes.

Outre les formulations granulométriques et les teneurs en bitume, la différence essentielle entre les enrobés bitumineux et les asphaltes réside dans le temps de fabrication de quelques minutes dans le premier cas à quelques heures (4 à 6 heures) dans le second cas.

Les exemples suivants, non limitatifs, illustrent la présente invention.

### Exemples

### I. Matières premières des systèmes d'additifs

Poix de tallol : Produit d'origine végétale, résidu de la distillation du tall-oil, sous-produit de la mise en pâte Kraft des résineux.

Esters végétaux ou esters d'alkyle d'acide gras : Les esters végétaux sont obtenus par estérification d'huile végétale. Cette réaction produit également du glycérol. L'ester végétal utilisé est un ester méthylique d'acide gras d'oléagineux oxydé.

Glycérol : co-produit de la production d'ester méthylique donc de la production des esters végétaux. Son point-éclair en vase ouvert est supérieur à 180°C et ce produit n'est pas étiqueté en terme de risque.

### II. Systèmes d'additifs

Les systèmes 1 et 2 se font par simple mélange avec une pâle d'agitation, voire un mélangeur statique, et circulation en recyclage avec une pompe.

L'ester est employé à température ambiante, le glycérol peut également l'être ou légèrement chauffé entre 40 et 60 °C, tout comme la poix de Tall-oil.

| | Système 1 | Système 2 | Système 3 |
|---|---|---|---|
| Constituants : | | | |
| - Poix de tall-oil | 40 % | 45 % | 0 % |
| - Ester végétaux | 40 % | 45 % | 0 % |
| - Glycérol | 20 % | 10 % | 100 % |
| Viscosité à 20 °C | 0,4 Pa.s | 0,3 Pa.s | 1,5 Pa.s |

Les systèmes d'additifs de l'invention sont liquides et miscibles au bitume à raison de 0,1 à 5 % en poids par rapport au poids du bitume.

### III. Préparation et évaluation des liants hydrocarbonés

Des liants hydrocarbonés (L1, L2, L3) comprenant respectivement les systèmes d'additifs 1 à 3 ont été préparés avec du bitume 10/20 Modulotal®.

Les quantités des systèmes d'additifs ajoutées sont de 1 % en poids par rapport au poids de bitume.

Pour évaluer les performances des liants bitumineux de l'invention, les caractéristiques suivantes ont été mesurées : la pénétrabilité, le point de ramollissement, le module complexe.

Pénétrabilité (EN 1426) : permet de déterminer la dureté d'un bitume. L'essai consiste à enfoncer une aiguille durant 5 secondes sous une charge de 100 grammes dans un prélèvement de bitume à 25°C. La profondeur mesurée est exprimée en dixièmes de millimètres et détermine la classe d'un bitume.

Température bille et anneaux ou TBA (EN 1427) : cette méthode permet de déterminer la température de ramollissement du bitume. Elle consiste à placer une bille en acier sur un anneau de bitume (placé dans un bêcher rempli d'eau) et à effectuer une montée en température à vitesse constante. Sous le poids de la bille, le bitume se déforme et la température dite « de ramollissement » est enregistrée lorsque l'abaissement de la bille atteint 25 mm.

Module complexe G* (15°C, 10 Hz) (EN 14770) : il est déterminé au moyen d'un rhéomètre à cisaillement dynamique. Pour cela, une déformation sinusoïdale de fréquence définie (10Hz) est appliquée à l'échantillon maintenu à une température de 15°C. Le bitume est placé entre deux plans parallèles, l'un fixe, l'autre mobile. Le montant supérieur impose la déformation de cisaillement, la contrainte résultante est relevée. Le module complexe G* est défini comme le rapport de l'amplitude de la contrainte sur l'amplitude de la déformation, en oscillation sinusoïdale harmonique.

| | Liant de référence | L1 | L2 | L3 | Spécifications NF EN 13924 |
|---|---|---|---|---|---|
| Pénétrabilité à 25° NF N 1426 (1/10 mm) | 16 | 19 | 20 | 17 | 10 à 20 |
| Point de ramollissement NF EN 1427 | 65,4 °C | 64 °C | 63,6 °C | 65,4 °C | 60 à 76 °C |
| Module complexe G* MPA (15°C - 10 Hz) MOPCST LA-1 | 63,1 | 52,5 | 50,8 | 58,4 | **** |

Conclusion : Les performances des liants ne sont pas sensiblement modifiées. On constate notamment que pour le liant comprenant le système d'additifs comprenant uniquement du glycérol (L3), on observe uniquement une faible réduction du module du liant de base.

### III. Préparation et évaluation des mélanges bitumineux

### 111.1. Enrobé bitumineux de type EB 10 Roul 35/50

Des enrobés (E1, E2, E3) de type EB 10 Roul 35/50 comprenant des liants hydrocarbonés à base d'un bitume 35/50 comprenant respectivement les systèmes d'additifs 1 à 3 ont été préparés. Les liants comprennent 1% en poids de système d'additifs par rapport au poids du bitume. La température de mélange du liant hydrocarboné et des granulats est de 120°C (température de fabrication).

L'enrobé de référence ne comprenant pas de système d'additifs a été préparé à 160 °C.

Les propriétés des enrobés de l'invention préparés à une température plus basse que traditionnellement ont été ensuite évaluées.

### Formulation de l'enrobé :

- 6/10 Noubleau 37,9%
- 2/6 Noubleau 26,5 %
- 0/2 Noubleau 28,4 %
- Filler calcaire 1,9 %
- Bitume 35/50 PC 5,21 %

Le bitume contient 1 % en poids de système d'additifs.

| | Référence 160°C | E1 120°C | E2 120°C | E3 120°C | Spécification EN 13108-1 |
|---|---|---|---|---|---|
| Essai PCG - NF EN12697-31 | | | | | |
| % de vides à 10 girations | 13,6 % | 13,5 % | 14,1 % | 14,5 % | C10 > 11 % |
| % de vides à 60 girations | 6,8 % | 6,7 % | 7,3 % | 7,7 % | 5 % > C60 < 10 % |
| Essai Duriez NF EN 251-1- | 0,95 | 0,84 | - | 0,80 | ≥ 0,75 |
| Rapport r/R | | | | | |
| Essai d'orniérage | | | | | |
| NFEN12697-22 | 3 % | 6,5 % | - | 5,6 % | 5 % ≤ V ≥ 8 % |
| % de vides moyen des plaques | 3,1 % | 3,2 % | - | 3,7 % | ≤ 5 % |
| Profondeur d'ornière en % à 30 000 cycles 60 °C | | | | | |

Enrobé 1 : L'évaluation d'un enrobé de type EB 10 Roul 35/50 à base d'un 35/50 modifié par 1% de poix/ester/glycérol (40%/40%/20%) à 120°C a permis de mettre en évidence l'efficacité du système d'additif puisque l'enrobé ainsi formulé respecte les spécifications de la norme NF P 98-130 classe 3 pour une étude de niveau 2.
Ce niveau conditionne le type d'essai à réaliser et les engagements à respecter : Le mélange doit satisfaire une fenêtre de pourcentage de vides à l'essai de Presse à Cisaillement Giratoire, un seuil de tenue à l'eau (rapport r/R) et une profondeur d'ornière maximale.

Enrobé 2 : L'évaluation d'un enrobé de type EB 10 Roul 35/50 à base d'un 35/50 modifié par 1% de poix/ester/glycérol (45%/45%/10%) à 120°C a permis de mettre en évidence l'efficacité du système d'additif puisque l'enrobé ainsi formulé respecte les spécifications de la norme NF P 98-130 classe 3 à l'essai PCG.

Enrobé 3 : L'évaluation d'un enrobé de type EB 10 Roul 35/50 à base d'un 35/50 modifié par 1% de poix/ester/glycérol (0%/0%/100%) à 120°C a permis de mettre en évidence l'efficacité du système d'additif puisque l'enrobé ainsi formulé respecte les spécifications de la norme NF P 98-130 classe 3. Cet additif n'entraîne qu'une faible réduction du module du liant de base.

### III.2. Enrobé de type EB 14 assise 10/20

Un enrobé (E4) de type EB 14 assise 10/20 comprenant un liant hydrocarboné à base d'un bitume 10/20 Modutotal comprenant le système d'additifs 3 a été préparé. Le liant comprend 1% en poids de système d'additifs par rapport au poids du bitume. La température de mélange du liant hydrocarboné et des granulats est de 140°C (température de fabrication).

Un enrobé de référence comprenant un liant 10/20 Modulotal® a été préparé à 180 °C.

### Formulation :

- 7/14 Cimescaut 29,2%
- 2/7 Cimescaut 23,5%
- 0/2 Cimescaut 40,5 %
- filler calcaire 0,9 %
- 10/20 Modulotal® 5,84 %

| | Référence à 180°C | E4 à 140°C |
|---|---|---|
| Essai module complexe NF EN 12697-26 | | |
| - % de vides moyen des trapèzes | 5,7 % | 3,2 % |
| - E à 15°C - 10 Hz (MPA) | 13 400 | 12532 |
| Essai de fatigue NF EN 12697-24 | | |
| - % de vides moyen des trapèzes | 5,5 % | 3,1 % |
| ε6 à 10°C - 25Hz | 125 µdef | 131 µdef |

L'essai de fatigue est un essai de flexion 2 points à déplacement imposé. Il est pratiqué sur des éprouvettes de forme trapézoïdale, encastrées à la base et maintenues à température constante, sollicitées en tête en flexion sinusoïdale par déplacement imposé d'amplitude constante pour chacune des séries. L'effort résistant opposé par l'éprouvette est mesuré en tête. La répétition des cycles de flexion alternée entraîne un endommagement de l'éprouvette qui se traduit par une diminution de sa raideur. L'essai est conduit jusqu'à réduction de moitié de l'effort mesuré en tête. C'est le critère conventionnel de rupture.

L'E6 est la déformation correspondant à un million de cycles. On peut donc constater que le système d'additif 3 ne pénalise pas la résistance en fatigue.

### 111.3. Asphalte ACR4 TL6 18

Un asphalte (A1) de type ACR4 TL6 18 selon la norme EN 13108-6, comprenant un liant hydrocarboné à base d'un bitume 35/50 comprenant le système d'additif 3 a été préparé. Le liant comprend 1% en poids de système d'additifs par rapport au poids du bitume. La température de mélange du liant hydrocarboné et des granulats est de 200°C (température de fabrication). Pour une température finale d'application de 180 °C.

L'enrobé de référence ne comprenant pas de système d'additifs a été préparé à 240 °C.

Les propriétés de l'asphalte de l'invention préparé à une température plus basse que traditionnellement ont été ensuite évaluées.

### Formulation de l'asphalte :

- 0/4 CCS Roulé 45,2 %
- 2/4 Noubleau 23,1 %
- Filler calcaire 23,9 %
- Bitume 35/50 Nynas® 7,8 %

Le bitume contient 1 % en poids de système d'additifs 3.

Dans les 2 cas, les qualités d'enrobage, de maniabilité et d'auto-lissage inhérente à cette technique sont conservées.

| | Référence 240°C | A1 180°C | Spécification Office des asphaltes |
|---|---|---|---|
| Essai d'indentation - NF T 66-002 Type B à 40 °C (1/10 mm) | 52 | 54 | 40 à 80 |

## Revendications

1. Liant hydrocarboné pour la réalisation de couches et/ou revêtements de construction routière et/ou de génie civil, comprenant au moins un bitume ou un liant de synthèse, **caractérisé en ce qu'**il comprend en outre un système d'additifs comprenant au moins 10 % en poids de glycérol par rapport au poids total du système d'additifs.

2. Liant selon la revendication 1, **caractérisé en ce que** le système d'additifs comprend en outre au moins une matière grasse d'origine naturelle comprenant des chaînes grasses hydrocarbonées éventuellement modifiées et/ou fonctionnalisées.

3. Liant selon la revendication 2, **caractérisé en ce que** la matière grasse d'origine naturelle est choisie parmi les huiles, graisses ou résines animales et/ou végétales, de préférence végétales.

4. Liant selon l'une quelconque des revendications 2 à 3, **caractérisé en ce que** la matière grasse d'origine naturelle est choisie parmi les acides gras, les esters d'acides gras, préférentiellement les esters d'alkyle, les alcools gras, les esters d'alcools gras, les esters de diacides gras, les esters d'acides résiniques, les acides résiniques, les dérivés de ces composés, et les mélanges de ces composés, d'origine animale ou végétale.

5. Liant selon l'une quelconque des revendications 2 à 4, **caractérisé en ce que** la matière grasse d'origine naturelle est choisie parmi les esters d'alkyle d'acide gras et les dérivés de la résine de pin tels que la poix de tallol et leurs mélanges.

6. Liant selon l'une quelconque des revendications 2 à 5, **caractérisé en ce que** le système d'additifs comprend en poids par rapport au poids total du système d'additifs :
- 10 à 100 % de glycérol,
- 0 à 60 % d'ester d'alkyle d'acide gras,
- 0 à 60 % de poix de tallol.

7. Liant selon l'une quelconque des revendications précédentes, **caractérisé en ce qu'**il comprend de 0,1 à 5 %, de préférence de 0,5 à 2 % de système d'additifs en poids par rapport au poids de bitume.

8. Mélange bitumineux **caractérisé en ce qu'**il comprend :
- des granulats minéraux,
- un liant hydrocarboné selon l'une quelconque des revendications 1 à 7.

9. Procédé de préparation d'un mélange bitumineux tel qu'un enrobé bitumineux ou un asphalte comprenant des granulats minéraux enrobés d'un liant hydrocarboné, le procédé comprenant une étape de séchage des granulats suivie d'une étape d'enrobage des granulats par un liant hydrocarboné dans un malaxeur ou un pétrin **caractérisé en ce que** :
- le liant hydrocarboné comprend du bitume ou un liant de synthèse, et un système d'additifs comprenant au moins 10 % en poids de glycérol par rapport au poids total du système d'additifs,
- ledit système d'additifs est ajouté au bitume ou au liant de synthèse avant son introduction dans le malaxeur ou le pétrin ou directement dans le malaxeur ou le pétrin.

10. Procédé selon la revendication 9 **caractérisé en ce que** la température de fabrication d'un enrobé bitumineux comprenant un bitume de grade 35/50 est comprise entre 110 et 140°C, de préférence entre 120 et 130°C et la température de fabrication d'un enrobé bitumineux comprenant un bitume de pénétrabilité inférieure à 35 1/10 de mm est comprise entre 130 et 150°C, de préférence entre 135 et 145°C.

11. Procédé selon la revendication 9 **caractérisé en ce que** la température de fabrication d'un asphalte comprenant un bitume de grade 35/50 dans le procédé de l'invention est comprise entre 170 et 210°C, de préférence entre 180 et 190 °C.
